# EUROPÄISCHE PATENTANMELDUNG

(11) **EP 1 719 942 A2**
(43) Veröffentlichungstag der Anmeldung: **08.11.2006**
(21) Anmeldenummer: 06405190.7
(22) Anmeldetag: 02.05.2006
(51) Int. Cl.: F16L 25/00, F16L 37/098

(54) **Rohrstutzen für Kabelrohre**

(30) Priorität: 02.05.2005 CH 769052005
(71) Anmelder: Morach, Christoph, 8335 Hittnau (CH)
(72) Erfinder: Morach, Christoph, 8335 Hittnau (CH)
(74) Vertreter: Breiter, Heinz

(57) **Zusammenfassung**

Die vorliegende Erfindung betrifft Rohrstutzen (10,10') für Kabelrohre (12) in Form eines auf ein Kabelrohrende (22) aufsteckbaren Hohlzylinders mit wenigstens einem von dessen Innenmantel (19) nach innen abkragenden Widerhaken (18) gegen Zugkräfte (Z). Die Widerhaken (18) heben sich unter Bildung einer Gleitfläche (24) in von der Eintrittsöffnung (16,16') des Rohrstutzens (10,10') wegweisender Richtung vom Innenmantel (19) ab, Sie bilden eine Kante (26) und einen zum Innenmantel (19) abfallenden Absatz (A), welcher in Abstand von einem Anschlag (20) für das Kabelrohrende (22) angeordnet ist. Die Widerhaken (18) sind als wenigstens eine flexible, nach aussen aufbiegbare Lasche (14,14') mit einem biegbaren Ende (36) in Richtung der Eintrittsöfrnung (16,16') des Rohrstutzens (10,10') ausgebildet. Weiter bezieht sich die Erfindung auf ein Verfahren zum Lösen des Rohrstutzens (10,10'), auf eine Kabelmuffe für Kabelrohre (12) aus wenigstens zwei stimseitig miteinander verbundenen Rohrstutzen (10,10') sowie auf eine Abzweigdose oder eine Lampendose mit wenigstens einem abkragenden Rohrstutzen (10,10').

## Beschreibung

Die vorliegende Erfindung betrifft einen Rohrstutzen für Kabelrohre in Form eines auf ein Kabelrohrende aufsteckbaren Hohlzylinders mit wenigstens einem von dessen Innenmantel nach innen abkragenden Widerhaken gegen Zugkräfte, wobei sich die Widerhaken unter Bildung einer Gleitfläche in von der Eintrittsöffnung des Rohrstutzens wegweisender Richtung vom Innenmantel abheben, eine Kante und einen zum Innenmantel abfallenden Absatz bilden, welcher in Abstand von einem Anschlag für das Kabelrohrende angeordnet ist. Weiter bezieht sich die Erfindung auf ein Verfahren zum Lösen des Rohrstutzens, auf eine Kabelmuffe für Kabelrohre mit wenigstens zwei Rohrstutzen sowie auf eine Abzweigdose oder eine Lampendose mit wenigstens einem abkragenden Rohrstutzen.

Rohrstutzen dieser Art sind im Baugewerbe, z.B. beim Veriegen von Kabelrohren im Auf- und Unterputz, unentbehrlich, um Kabelrohre schnell und sicher auf Stoss miteinander zu verbinden.

Problematisch ist die Vielzahl des Angebots von unterschiedlichen Fabrikaten für Kabelrohre, welche trotz Normung zu grosse Durchmessertoleranzen aufweisen, weshalb die Normgrössen solcher Rohrstutzen selten genau passen. Deshalb kann man entweder das betreffende Kabelrohrende oft nicht oder nur mit zuviel Spiel in die betreffende Rohrstutzen eindrücken. Eine stabile Verbindung wird nach dem bekannten Stand der Technik z.B. mit Klebemitteln, einer Umwicklung der Kabelrohrenden oder dgl. Mitteln erzielt.

Aus der EP 1384932 A1 sind Rohrmuffen aus zwei miteinander verbundenen Rohrstutzen bekannt, die bei einfacher Handhabung und unter Vermeidung von Klebemitteln, der Umwicklung der Kabelrohrenden oder dgl. auch jene Kabelrohre stabil, sicher und gut herstellbar verbinden, die trotz Normung Durchmessertoleranzen u nd/oder eine unterschiedliche Struktur der aussenseitigen Kabelrohrenden aufweisen. Dieses Verbindungsprinzip für Kabelrohre hat sich in der Praxis bewährt und erfüllt die gestellten Vorgaben. Es hat sich gezeigt, dass aber das Lösen der Rohrmuffen oft nur mit erheblichem Kraftaufwand möglich ist, was oft zu einer Beschädigung der Rohrstutzen der Muffe führt.

Der Erfinder hat sich deshalb die Aufgabe gestellt, einen Rohrstutzen der eingangs erwähnten Art zu schaffen, welcher auch ein einfacheres und sichereres Lösen von Kabelrohrverbindungen gemäss der EP 1384932 A1 ermöglicht, ohne die Kabelrohre oder Rohrstutzen beim Lösen zu beschädigen.

Die Aufgabe wird bezüglich des Rohrstutzens erfindungsgemäss dadurch gelöst, dass die Widerhaken als wenigstens eine flexible, nach aussen aufbiegbare Lasche mit einem biegbaren Ende in Richtung der Eintrittsöffnung des Rohrstutzens ausgebildet sind. Spezielle und weiterbildende Ausführungsformen des Rohrstutzens sind Gegenstand von abhängigen Patentansprüchen.

Ein wesentlicher Vorteil des erfindungsgemässen Rohrstutzens besteht darin, dass nach einem Aufbiegen der flexiblen Lasche nach aussen die in den Rohrstutzen eingeführte Kabelrohrleitung praktisch ohne Aufwand an Zugkraft wieder gelöst und derselbe Rohrstutzen mehrmals wiederverwendet werden kann. Hierbei bleibt auch das Kabelrohr unbeschädigt beziehungsweise bleibt in der ursprünglichen Länge erhalten, weshalb ein ansonsten möglicherweise zu kurzes Rohrkabel ebenfalls nicht ersetzt werden muss.

Der Rohrstutzen besteht in der Praxis aus einem einstückig gespritzten Kunststoff- oder einem leicht bearbeitbaren, federnden Metall. Beide müssen im rauhen Baubetrieb auch schlagfest sein. Dieser Rohrstutzen ist für die Verbindung aller im Baugewerbe üblichen Kabelrohre geeignet, mit glattem, gewelltem, schraubenlinienförmigem, gerilltem, geriffeltem oder sonstwie ausgebildetem Aussenmantel, mit oder ohne Aussenbeschichtung. Flexible Kunststoffrohre mit zylindermantelförmiger Aussenfläche können ebenso in den Rohrstutzen gesteckt und verankert werden wie metallische Wellenrohre, um nur einige Beispiele zu nennen. Der Rohrstutzen bzw. dessen Widerhaken besteht vorzugsweise aus härterem Material als das Kabelrohr.

Für eine gut herstellbare Verbindung des betreffenden Kabelrohres im Rohrstutzen ist es vorteilhaft, dass ein Widerhaken unter Ausbildung einer Gleitfläche in Richtung der Rohrmitte kontinuierlich ansteigt, dann vorzugsweise unter Ausbildung einer scharfen, sich bei Anwendung einer Rückzugkraft einschneidenden Kante einen steil abfallenden Absatz hat. Dieser Absatz ist vorteilhaft in einem Winkel von 75-90° zur Längsachse des Rohrstutzens rechtwinklig oder hinterschnitten ausgebildet. Die Gleitfläche ist kontinuierlich ausgebildet und kann als schräge Ebene, aber auch mit degressiver oder progressiver Krümmung ansteigen.

Je nach Ausführungsform kann der Rohrstutzen beliebig viele, axial und/oder radial stochastisch oder nach Symmetriegesichtspunkten, d.h. hintereinander oder entlang eines Umfangs nebeneinander oder versetzt zueinander, verteilte Widerhaken beziehungsweise flexible Laschen aufweisen.

Um beim und nach dem Aufbiegen der flexiblen Lasche ein Abrutschen eines Hilfsmittels, das durch einen, je nach Ausführungsform halbrunden, trapez-, U- oder dreiecksförmigen, Schlitz zwischen der Lasche und Rohrmantel geschoben wird, zu vermeiden und möglichen Verletzungen entgegenzuwirken, weist die flexible Lasche an deren freien Ende je nach Ausführungsform bevorzugt eine im Querschnitt runde, ovale oder dreiecksförmige innenliegende Einbuchtung als Fixierhilfe auf. Als Hilfsmittel wird vorzugsweise ein Schraubenzieher genutzt. Gegebenenfalls erfüllt diese Aufgabe aber auch ein Nagel oder ein anderes, entsprechend ausgebildetes Hilfsmittel erfüllen.

Entsprechend den Materialeigenschaften und der Geometrie kann es sinnvoll sein, am biegbaren Ende der flexiblen Lasche eine oder mehrere Schwächungslinien mit unter Umständen unterschiedlicher Tiefe, Breite, Länge oder Anzahl vorzusehen, damit der Widerstand der flexiblen Lasche beim Aufbiegen in vorgegebenen Grenzen bleibt und ein mehrmaliges Zurückfedern in die Ausgangsposition oder nahe an die Ausgangsposition sichergestellt ist.

Um die Kabeirohrenden so in den Rohrstutzen einstossen zu können, dass sie in ihrer Endlage im Bereich der Längsmitte auf Stoss angeordnet sind, ist zweckmässig längsmittig auf der Innenseite des Hohlzylinders ein Anschlag ausgebildet, welcher als Flansch umlaufend oder als wenigstens einen Nocken nach innen abragt.

Für eine problemlose Erkennung eines bestimmten Rohrstutzens besteht dieser nach einer vorteilhaften Ausführungsform aus einem mit einer Kennfarbe eingefärbten Kunststoffteil, was eine allfällige Verwechslung sofort erkennbar macht. Alternativ oder ergänzend erfolgt in einer weiteren, vorteilhaften Ausführungsform eine Kennzeichnung mittels Ziffemangabe in Millimeter oder Zoll, welche einen zulässigen Aussendurchmesser beziehungsweise einen zulässigen Aussendurchmesser-Bereich für einen bestimmten Rohrstutzen ausweist.

Bezüglich des Verfahrens wird die Aufgabe erfindungsgemäss dadurch gelöst, dass die flexible Lasche mit einem Schraubenzieher oder Nagel aufgebogen und fixiert wird.

Ein Elektromonteur hat meist Schraubenzieher verschiedener Grösse bei sich, kann sich jedoch wie erwähnt auch mit einem Nagel oder dgl. behelfen.

Eine erfindungsgemässe Kabelmuffe für Kabelrohre besteht aus wenigstens zwei stimseitig miteinander verbundenen Rohrstutzen.

Da die Widerhaken hierbei in Abstand von der Längsmitte des Rohrstutzens angeordnet sind, ermöglicht diese Ausgestaltung ein beliebiges ZusammenführenNerbinden von wenigstens zwei Kabelrohren, beispielsweise, um ein Kabelrohr mit einem zweiten Kabelrohr zu verlängern. Damit lassen sich zum Beispiel an bereits verlegten Kabelrohrleitungen nachträglich auf einfache Weise Korrekturen anbringen, ohne die bis anhin durch ein Trennen möglicherweise beschädigten Rohrstutzen und/oder Kabelrohrleitungsenden entsorgen und die nun möglicherweise zu kurzen Kabelrohre verlängem oder zusammen mit den Kabelmuffen ersetzen zu müssen.

Die Kabelmuffe kann gerade, abgebogen und/oder abgewinkelt ausgebildet sein. Mit dieser Ausgestaltung wird ein geradliniges Verlängem und/oder ein Umlenken von wenigstens einem Kabelrohr ermöglicht. Weiterhin kann die Kabelmuffe vorteilhaft als Y-, T- oder stemförmiges Verzweigungsstück ausgebildet sein, wodurch sie wenigstens zwei Kabeirohre zu einem einzelnen Kabelrohr zusammenführt beziehungsweise umgekehrt auseinanderführt.

Das dichte Einbetonieren oder Eingipsen des Rohrstutzens 10 kann noch sicherer erfolgen, wenn sich dessen Innenfläche in von der Eintrittsöffnung 16 wegweisender Richtung leicht konisch verengt. Vorzugsweise über den Umfang verteilte Aussparungen in der Aussenfläche des Rohrstutzens 10 können dessen Verschiebungssicherheit erhöhen.

Eine Abzweigdose oder Lampendose für einbetonierte oder eingegipste elektrische Installationen elektrische Installationen und/oder Kommunikationsnetzwerke weist erfindungsgemäss wenigstens einen abkragenden Rohrstutzen auf.

Bevorzugt weist die Abzweig- oder Lampendose mit Bezug auf den Innendurchmesser unterschiedliche, abkragenden Rohrstutzen auf. Dadurch wird erreicht, dass die Abzweig- oder Lampendose für eine grosse Bandbreite an Kabelrohr-Aussendurchmessem geeignet geeignet ist.

In einer vorteilhaften Variante sind die Rohrstutzen mit einem Verschluss versehen. Dieser wird bei Bedarf mit dem Kabelrohr selbst, einem Schraubenzieher oder einem Messer in an sich bekannter Weise an einer Sollbruchstelle weggebrochen. Nicht benötigte Rohrstutzen bleiben auf diese Weise weiterhin verschlossen, wodurch die Doseninnenseite vor flüssigem Beton oder Gips und/oder vor Schmutz geschützt ist.

Vorzugsweise ist im Bereich der Dosenaussenwandung der Abzweig- oder der Lampendose zudem ein Anschlag für das einzuführende Kabelrohr angeordnet. Dadurch wird ein exaktes Positionieren des Kabelrohrs mit dessen Ende im Bereich der Dosenaussenwand erreicht, wodurch das Kabelrohr nicht in den Bereich der Doseninnenraums gelangen und eine Verkabelung behindern kann.

Die Erfindung wird anhand von in Zeichnungen dargestellten Ausführungsbeispielen, welche auch Gegenstand von abhängigen Ansprüchen sind, näher erläutert. Es zeigen schematisch:
Fig. 1 eine dreidimensionale Ansicht eines Rohrstutzens mit einem eingesteckten Kabelrohr und verrasteter Lasche,
- Fig. 2 einen axialen Längsschnitt des Rohrstutzens gemäss Fig. 1,
- Fig. 3 ein vergrössertes Detail III von Fig. 2,
- Fig. 4 eine dreidimensionale Ansicht auf die Innenseite d es Rohrstutzens ohne eingestecktes Kabelrohr,
- Fig. 5 eine dreidimensionale Ansicht einer geraden Kabelmuffe mit einer einseitig aufgebogenen, flexiblen Lasche,
- Fig. 6 einen axialen Längsschnitt der Kabelmuffe gemäss Fig. 5,
- Fig. 7 ein vergrössertes Detail VI von Fig. 6,
- Fig. 8 eine abgebogene Kabelmuffe mit abreissbarem Deckel, Stütze und zwei Befestigungsdübeln,
- Fig. 9 eine einseitige offene Abzweigdose mit vielen abkragenden Rohrstutzen, und
- Fig. 10 eine Lampendose mit mehreren rechtwinklig abkragenden Rohrstutzen.

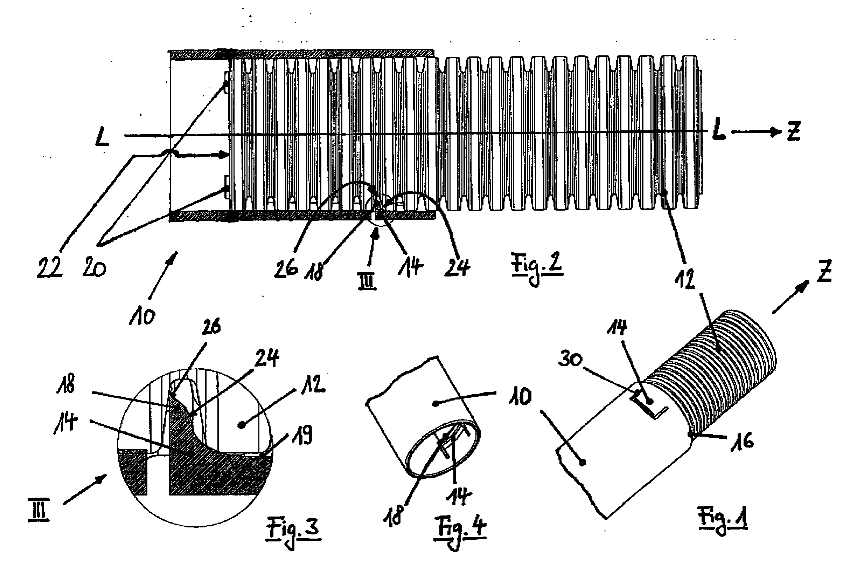

Die Fig. 1 bis 3 stellen einen Rohrstutzen 10 mit einem in eine stimseitige Eintrittsöffnung 16 eingesteckten, wellenmantelförmigen Kabelrohr 12 und einer verrasteten Lasche 14 dar, die das Kabelrohr 12 mittels eines Widerhakens 18 fixiert und in axialer Richtung L gegen Zugkräfte Z sichert. Das Kabelrohr 12 liegt hierbei mit einem Kabelrohrende 22 an einem teilweise umlaufenden Anschlag 20 in Form eines Flansches an.

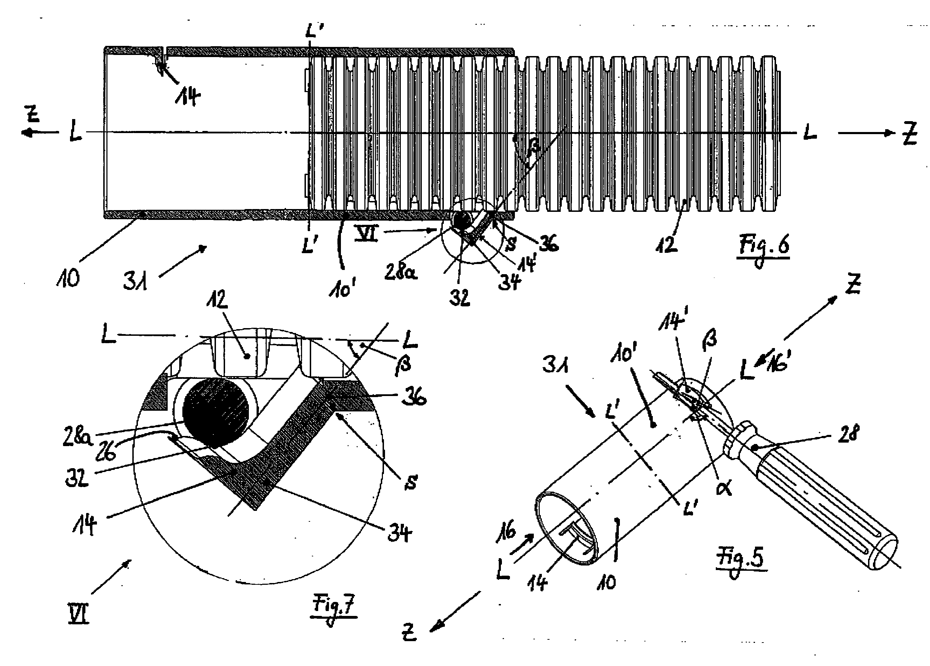

In Fig. 2 ist der Bereich III der flexiblen Lasche 14 eingekreist und in Fig. 3 vergrössert dargestellt. Der Widerhaken 18 ragt vom Innenmantel 19 in Richtung der Längsmittelachse L ab und ist so ausgebildet, dass er beim Hineinschieben des Kabelrohres 12 nach aussen aufbiegt und so ein einfaches Hineinschieben des Kabelrohres 12 auf einer Gleitfläche 24 ermöglicht. Liegt das Kabelrohrende 22 am Anschlag 20 an oder zieht man das Kabelrohr 12 nach Erreichen des Anschlages 20 leicht zurück, so federt die aufgebogene flexible Lasche 14 zurück, der Widerhaken 18 verrastet im zu fixierenden Kabelrohr 12 und sichert es zuverlässig auch gegen grosse Zugkräfte Z. Bei einem nicht dargestellten Kabelrohr 12 mit glatter, äusserer Oberfläche wird die flexible Lasche 14 angedrückt, wobei sich der Widerhaken 18 beim Ausüben einer Zugkraft Z mit einer Kante 26 im zu fixierenden Kabelrohr 12 eingräbt, und die flexible Lasche 14 nach innen zieht.

Zwischen d er flexiblen L asche 14 und dem Rohrstutzen 10 ist ein genügend breiter Schlitz 30 ausgebildet, der das Einstossen eines Schraubenziehers 28 (Fig. 5) erlaubt und das Aufbiegen der flexiblen Lasche 14 erleichtert.

Fig. 4 zeigt eine dreidimensionale Ansicht der Innenseite des Rohrstutzens 10 ohne eingestecktes Kabelrohr 12 im Bereich der flexiblen Lasche 14 mit einem Widerhaken 18.

Die Fig. 5 bis 7 stellen eine gerade Kabelmuffe 31 dar, welche aus zwei axial entlang der Längsmittelachse L aneinandergefügten Rohrstutzen 10, 10' mit zueinander entgegengesetzten Eintrittsöffnungen 16, 16' gebildet ist. In der Längsmitte L' ist ein Anschlag 20 angedeutet. Die Rohrstutzen 10, 10' weisen jeweils eine flexiblen Lasche 14, 14' auf, wobei die flexible Lasche 14' mit einem Schraubenzieher 2 8 n ach aussen aufgebogen und gesichert ist. Der Schraubenzieher 28 wird von der Seite unter einem etwa rechten Winkel α zur Längsmittelachse L unter die Lasche 14' gestossen und entlang einer innenseitigen Einbuchtung 32 in tangentialer Richtung weitergeschoben, bis er beidseits der Laschenöffnung auf dem Rohrstutzen 10' aufliegt.

Durch den beschriebenen, einfachen Vorgang wird die flexible Lasche 14' um einen Winkel β zur Längsmittelachse L aufgebogen und gesichert, was ein Verschieben oder Herausziehen des Kabelrohres 12 mit einer sehr geringen Zugkraft Z ermöglicht.

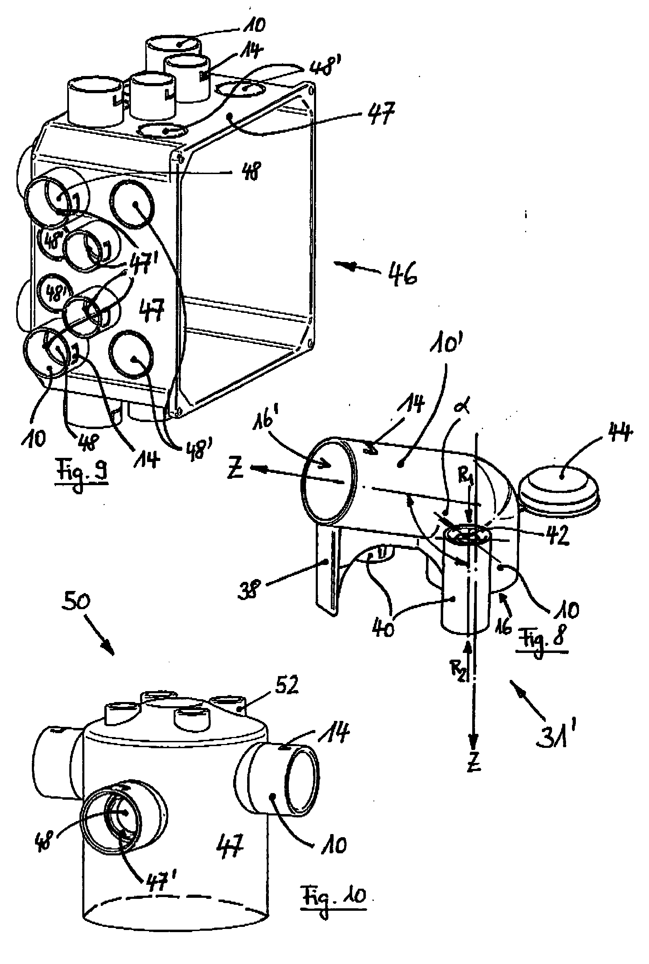

Fig. 6 zeigt den Bereich VI der aufgebogenen, flexiblen Lasche 14' eingekreist und in Fig. 7 vergrössert. In beiden Figuren ist die aufgebogene, flexible Lasche 14' mit einem Schraubenzieher 28 gesichert, wobei d essen Schaftquerschnitt mit 28a dargestellt ist. Die vorteilhaft leicht abgerundete Einbuchtung 32 am freien Ende 34 der flexiblen Lasche 14,14' dient einer besseren Aufnahme des Schaftquerschnitts 28a und wirkt so einem ungewollten Abrutschen des Schraubenziehers 28 und dabei möglicherweise auftretenden Verletzungen entgegen. Am biegbaren Ende 36 der flexiblen Lasche 14' ist eine Schwächungslinie S angedeutet, die den Materialeigenschaften und der Geometrie des Rohrstutzens 10, 10' entsprechend angepasst ein leichteres Aufbiegen der flexiblen Lasche 14, 14' ermöglicht.

Wird, nachdem ein Kabelrohr 12 aus dem Rohrstutzen 10 und/oder 10' auf die beschriebene Art und Weise herausgezogen wurde, erneut ein Kabelrohr 12 eingeführt, so ist ein neuerliches, sicheres und einfaches Verrasten der flexiblen Lasche 14 beziehungsweise 14' mit der Kante 26 gewährleistet. Dieser Vorgang kann mehrfach und in der Praxis ausreichend oft wiederholt werden.

Fig. 8 zeigt eine abgebogene Kabelmuffe 31', in der Praxis auch Übergangsdübel genannt, bei welcher zwei Rohrstutzen 10, 10' in einem Winkel α mit zueinander entgegengesetzten Eintrittsöffnungen 16, 16' miteinander verbunden sind. Damit können zwei der Übersichtlichkeit wegen nicht dargestellte Kabelrohre 12 im Winkel α zueinander verbunden werden, wobei die Kabelrohre 12 durch jeweils eine flexible Lasche 14 gegen axiale Zugkräfte Z gesichert sind. In einer weiteren, nicht dargestellten Ausführungsvariante sind jeweils zwei flexible Laschen 14 paarweise gegenüberliegend ausgebildet.

In Fig. 8 weisen die beiden Rohrstutzen 10, 10' unterschiedliche Rohrinnendurchmesser auf, wodurch zwei bezüglich des Aussendurchmesser-Bereichs unterschiedliche Kabelrohre 12 miteinander verbunden werden können.

Damit eine genügend genaue Ausrichtung der Kabelmuffe 31' und eine einfache Vormontage auf einem nicht dargestellten Träger möglich ist, insbesondere auf einer Schaltafel zum Betonieren, weist die Kabelmuffe 31' einen Stützfuss 38 auf. Daneben weist das gezeigte Ausführungsbeispiel zwei seitliche Befestigungsdübel 40 auf, welche ein Festnageln oder -schrauben der Kabelmuffe 31' auf der erwähnten Schaltafel auf einfache Weise ermöglichen. Dabei ist einerseits das Befestigen von oben durch eine Bohröffnung 42 in Richtung R₁ möglich. Andererseits ist ein Festschrauben von unten in Richtung R₂ durch einen Träger hindurch möglich, wobei beim Hineindrehen einer passenden Gewindeschneide-Schraube diese sich selbst e in Gewinde in den Befestigungsdübel 40 schneidet und die Kabelmuffe 31' am Träger fixiert.

Schliesslich weist die Kabelmuffe 31' auch einen abreissbaren Deckel 44 auf, mit welchem die im vormontierten Zustand unverschlossene Eintrittsöffnung 16 bei Bedarf verschlossen und damit beispielsweise vor Schmutz, flüssigem Gips oder Beton geschützt werden kann. Die Eintrittsöffnung 16' wird im vormontierten Zustand durch das eingeführte Kabelrohr verschlossen.

Fig. 9 zeigt eine einseitige offene Abzweigdose 46 vielen abkragenden Rohrstutzen 10, welche vorliegend teilweise unterschiedliche Rohrinnendurchmesser aufweisen, wodurch die Abzweigdose 46 für unterschiedliche Kabelrohr-Aussendurchmesser geeignet ist. Werden Kabelrohre 12 in die Rohrstutzen 10 eingeführt, stossen sie im Bereich der Dosenaussenwandung 47 an einem Anschlag 47', wodurch das Eindringen der Kabelrohre 12 in den Innenraum der Abzweigdose 46 verhindert wird.

Ober die bereits aufgeführten Merkmale hinaus weist die Abzweigdose 46 die Möglichkeit auf, Rohre und/oder Kabel über an sich bekannte, an einer Sollbruchstelle herausbrechbare Verschlüsse 48' an/in die Abzweigdose 46 zu führen, wobei an diesen Stellen keine Rohrstutzen 10 ausgebildet sind. Die Rohrstutzen 10 selbst sind ebenfalls mit an Sollbruchstellen herausbrechbaren Verschlüssen 48 versehen, welche ein Eindringen von Beton oder Gips durch unbenutzte Rohrstutzen 10 verhindern.

In einer nicht dargestellten Varianten der Abzweigdose 46 ist diese zweiseitig geöffnet, wobei die Öffnungen benachbart oder gegenüberliegend angeordnet sind und eine Steuerung der elektrische Installationen und/oder der Kommunikationsnetzwerke von zwei Seiten gleichzeitig ermöglichen, zum Beispiel an der Ecke einer Hauswand oder von zwei gegenüberliegenden Seiten einer Mauer.

Fig. 10 schliesslich zeigt eine Lampendose 50, welche vier umlaufende, regelmässig angeordnete Rohrstutzen 10 aufweist. Die Lampendose 50 ist wie die Abzweigdose 46 einseitig geöffnet. Sie weist vier Schrauben- bzw. N agelführungen 52 zur Befestigung auf einem Träger, vorzugsweise einer Schaltafel, auf.

## Patentansprüche

1. Rohrstutzen (10, 10') für Kabelrohre (12) in Form eines auf ein Kabelrohrende (22) aufsteckbaren Hohlzylinders mit wenigstens einem von dessen Innenmantel (19) nach innen abkragenden Widerhaken (18) gegen Zugkräfte (Z), wobei sich die Widerhaken (18) unter Bildung einer Gleitfläche (24) in von der Eintrittsöffnung (16, 16') des Rohrstutzens (10, 10') wegweisender Richtung vom Innenmantel (19) abheben, eine Kante (26) und einen zum Innenmantel (19) abfallenden Absatz (A) bilden, welcher in Abstand von einem Anschlag (20) für das Kabelrohrende (22) angeordnet ist,
**dadurch gekennzeichnet, dass**
die Widerhaken (18) als wenigstens eine flexible, nach aussen aufbiegbare Lasche (14, 14') mit einem biegbaren Ende (36) in Richtung der Eintrittsöffnung (16, 16') des Rohrstutzens (10, 10') ausgebildet sind.

2. Rohrstutzen (10, 10') nach Anspruch 1, **dadurch gekennzeichnet, dass** die Gleitfläche (24) der flexiblen Lasche (14, 14') kontinuierlich, vorzugsweise schräg, degressiv oder progressiv gekrümmt ausgebildet ist.

3. Rohrstutzen (10, 10') nach Anspruch 1 oder 2, **dadurch gekennzeichnet, dass** der Absatz (A) steil, rechtwinklig zur Längsachse (L) oder hinterschnitten ausgebildet ist.

4. Rohrstutzen (10, 10') nach einem der Ansprüche 1 bis 3, **dadurch gekennzeichnet, dass** in Richtung der Längsmittelachse (L) mehrere flexible Laschen (14, 14') hintereinander liegend und/oder entlang eines Umfangs angeordnet sind.

5. Rohrstutzen (10, 10') nach einem der Ansprüche 1 bis 4, **dadurch gekennzeichnet, dass** die Innenseite der flexiblen Lasche (14, 14') am freien Ende (34) eine Einbuchtung (32) als Fixierhilfe für ein Hilfsmittel (28) aufweist, die im Querschnitt vorzugsweise rund, oval oder dreiecksförmig ausgebildet ist.

6. Rohrstutzen (10, 10') nach einem der Ansprüche 1 bis 5, **dadurch gekennzeichnet, dass** die flexible Lasche (14, 14') am biegbaren Ende (36) wenigstens eine Schwächungslinie (S) aufweist.

7. Rohrstutzen (10, 10') nach einem der Ansprüche 1 bis 6, **dadurch gekennzeichnet, dass** zwischen der flexiblen Lasche (14, 14') und dem Rohrmantel ein Schlitz (30) ausgebildet ist.

8. Rohrstutzen (10, 10') nach einem der Ansprüche 1 bis 7, **dadurch gekennzeichnet, dass** im Bereich der Längsmitte (L') innenseitig ein wenigstens teilweise umlaufender Flansch oder wenigstens ein Nocken als Anschlag (20) für die Kabelrohre (12) abragt.

9. Verfahren zum Lösen des Rohrstutzens (10, 10') nach einem der Ansprüche 1 bis 8, **dadurch gekennzeichnet, dass** die flexible Lasche (14, 14') mit einem Schraubenzieher (28) oder einem Nagel aufgebogen und fixiert wird.

10. Kabelmuffe (31, 31') für Kabelrohre (12) aus wenigstens zwei stirnseitig miteinander verbundenen Rohrstutzen (10, 10') nach einem der Ansprüche 1 bis 9.

11. Kabelmuffe (31, 31') nach Anspruch 10, **dadurch gekennzeichnet, dass** die Rohrstutzen (10, 10') gerade, abgebogen, abgewinkelt und/oder als Y-, T oder sternförmiges Verzweigungsstück angeordnet sind.

12. Abzweigdose (46) oder Lampendose (50) für einbetonierte oder eingegipste elektrische Installationen und/oder Kommunikationsnetzwerke mit wenigstens einem abkragenden Rohrstutzen (10, 10') nach einem der Ansprüche 1 bis 8.

13. Abzweigdose (46) oder Lampendose (50) nach Anspruch 12, **dadurch gekennzeichnet, dass** im Bereich der Dosenaussenwandung (47) ein Anschlag (47') für das eingeführte Kabelrohr (12) angeordnet ist.
